# EUROPEAN PATENT APPLICATION

(11) **EP 3 698 860 A1**
(43) Date of publication of application: **26.08.2020**
(21) Application number: 18868926.9
(22) Date of filing: 09.08.2018
(51) Int. Cl.: B01D 1/24, B01D 1/30

(54) **CIRCULAR RING TYPE DRYING MACHINE**

(30) Priority: 18.10.2017 CN 201710970873
(71) Applicant: Shenzhen Baisijia Science And Technology Co., Ltd., Shenzhen, Guangdong 518000 (NA)
(72) Inventor: QIN, Jianwu, Shenzhen Guangdong 518000 (CN); QIN, Jianzhou, Shenzhen Guangdong 518000 (CN); QIN, Yufang, Shenzhen Guangdong 518000 (CN)
(74) Representative: Auty, Samuel Edward
(86) International application number: PCT/CN2018/099550
(87) International publication number: WO 2019/076107

(57) **Abstract**

The present invention discloses a ring dryer, comprising a housing, a top cover provided at the top of the housing, and a base provided at the bottom of the housing, and further comprising a feeding system into which the material to be dried flows, a material coating assembly, a material extrusion assembly, a discharging scraper, and at least two cylinders with different radii, wherein each of the cylinders is provided with a heat medium flow path inside, an annular groove is formed between the adjacent cylinders, and a material outlet is provided at a free end of the feeding system; the material to be dried in the feeding system flows into the annular groove along the material outlet; the material coating assembly, the material extrusion assembly and the discharging scraper are movably arranged in the annular groove and can move along the annular groove relative to the cylinders; and a blade of the discharging scraper is respectively in contact with an inner circumferential surface of the cylinder and an outer circumferential surface of the adjacent cylinder. The present invention has the advantages in that the drying area of the material to be dried is increased, and the material to be dried does not need to be vigorously stirred by the components of the present invention so as to reduce friction between the material to be dried and the components, thereby extending the service life.

## Description

### Technical Field

The present invention relates to the technical field of drying of slurry materials, and in particular to a ring dryer.

### Background Art

There are many types of conductive heat transfer dryers, among which hollow paddle dryers are widely used in the drying of slurry materials. Heat exchange components of a hollow paddle dryer include a hollow paddle and a housing with a heating jacket. Due to the full contact with a slurry material, the heat exchange components have high surface utilization and high heat conduction efficiency. However, because the material is continuously stirred and turned by the paddle, there are problems such as wear of the paddle and large power consumption.

### Summary of the Invention

An object of the present invention is to solve the deficiencies of the prior art and provide a ring dryer.

The technical solution of the present invention is:
a ring dryer, comprising a housing, a top cover provided at the top of the housing, and a base provided at the bottom of the housing, and further comprising a feeding system into which the material to be dried flows, a material coating assembly, a material extrusion assembly, a discharging scraper, and at least two cylinders with different radii, wherein each of the cylinders is provided with a heat medium flow path inside, an annular groove is formed between the adjacent cylinders, and a material outlet is provided at a free end of the feeding system; the material to be dried in the feeding system flows into the annular groove along the material outlet; the material coating assembly, the material extrusion assembly and the discharging scraper are movably arranged in the annular groove and can move along the annular groove relative to the cylinders; and a blade of the discharging scraper is respectively in contact with an inner circumferential surface of the cylinder and an outer circumferential surface of the adjacent cylinder.

In a preferred solution, the material extrusion assembly comprises an outer extrusion belt, an inner extrusion belt, an outer extrusion circular roll and an inner extrusion circular roll, wherein the outer extrusion circular roll drives the outer extrusion belt to rotate and move along the annular groove, and the outer extrusion belt is in contact with the inner circumferential surface of the cylinder; and the inner extrusion circular roll drives the inner extrusion belt to rotate and move along the annular groove, and the inner extrusion belt is in contact with the outer circumferential surface of the adjacent cylinder.

In a preferred solution, the outer extrusion belt and the inner extrusion belt are arranged parallel to each other, and a separation circular roll is provided between the outer extrusion belt and the inner extrusion belt.

In a preferred solution, the material coating assembly comprises a pair of material spreading circular rolls and a pair of material spreading plates, the pair of material spreading circular rolls being longitudinally arranged in the annular groove and parallel to an axis of the housing, wherein one end of one material spreading plate is close to one material spreading circular roll, and the other end thereof forms a distributing port together with the inner circumferential surface of the cylinder; and one end of the other material spreading plate is close to the other material spreading circular roll, and the other end thereof forms a distributing port together with the outer circumferential surface of the adjacent cylinder.

In a preferred solution, the material coating assembly further comprises a material distributor, wherein the material distributor comprises several uniform distribution pipes in parallel, the material outlet of the feeding system is connected in a butt joint with a feeding port of the uniform distribution pipe on the inner side, and the uniform distribution pipe on the outer side is provided with several dispatching ports in sequence from top to bottom.

In a preferred solution, an annular plate is provided at the top of the cylinder, toothing holes are uniformly distributed around the annular plate, a first gear is provided at the top of the outer extrusion circular roll, a second gear is provided at the top of the inner extrusion circular roll, the first gear rotates along the toothing holes of the annular plate, and the second gear rotates along the toothing holes of the adjacent annular plate.

In a preferred solution, the feeding system is transversely arranged in the housing and can rotate around the axis of the housing, the free end of the feeding system is connected to an upper connecting plate, the top of the discharging scraper is connected to the upper connecting plate, the top of the material coating assembly is connected to the upper connecting plate, the top of the material extrusion assembly is connected to the upper connecting plate, the bottom of the discharging scraper is connected to a lower connecting plate, the bottom of the material coating assembly is connected to the lower connecting plate, and the bottom of the material extrusion assembly is connected to the lower connecting plate.

In a preferred solution, the ring dryer further comprises a rotating shaft, wherein an annular rake rod is provided inside the base, and the rake rod is fixedly connected to the feeding system by means of the rotating shaft.

In a preferred solution, the bottom of the housing is provided with a heat medium inlet pipe and a heat medium outlet pipe, wherein the heat medium inlet pipe is connected to an inlet of the heat medium flow channel of the cylinder, and the heat medium outlet pipe is connected to an outlet of the heat medium flow channel of the cylinder.

In a preferred solution, the top cover is provided with a gas discharge port and a material inlet, and the material inlet is connected to the feeding port of the feeding system.

By combining the above technical solutions, the present invention has the beneficial effects in that the material to be dried is uniformly coated on the inner circumferential surface and the outer circumferential surface of the cylinders, thereby increasing the drying area of the material to be dried to ensure the material to be dried to receive heat continuously and steadily; and the material to be dried does not need to be vigorously stirred by the components of the present invention so as to reduce the friction between the material to be dried and the components, thereby extending the service life while reducing the power consumption.

The description above is only summary of the technical solution of the present invention. In order to understand the technical means of the present invention more clearly for implementation according to the contents of the specification, and in order to make the above and other objectives, features and advantages of the present invention more apparent and easy to be understood, the preferred embodiments are especially taken as examples in conjunction with the accompanying drawings, and the detailed description is as follows.

### Brief Description of the Drawings

Fig. 1 is a cross-sectional view of the present invention;
Fig. 2 is a partial top view of the present invention;
Fig. 3 is a top view of a cross-section of a housing and a cylinder of the present invention;
Fig. 4 is a top view of a material coating assembly and a discharging scraper in the present invention;
Fig. 5 is a perspective view of a cylinder in the present invention;
Fig. 6 is a schematic diagram of an annular plate in the present invention;
Fig. 7 is a schematic diagram of an outer extrusion circular roll and an inner extrusion circular roll in the present invention;
Fig. 8 is a front view of the material distribution work of the present invention;
Fig. 9 is a rear view of the material distribution work of the present invention;
Fig. 10 is a schematic diagram of an upper connecting plate of the present invention; and
Fig. 11 is a schematic diagram of a lower connecting plate according to the present invention.

In the figures: top cover 10, gas discharge port 11, material inlet 12, housing 20, cylinder 21, heat medium inlet pipe 210, heat medium outlet pipe 211, heat medium flow channel 212, annular groove 22, annular plate 23, toothing hole 24, first gear 25, second gear 26, upper connecting plate 27, lower connecting plate 28, hole 29, base 30, rake rod 31, rotating shaft 32, electric motor 33, rake blade 34, shaft holder 35, discharge port 36, feeding system 40, cross rod 41, feeding pipe 42, material outlet 43, material coating assembly 50, distributing circular roll 51, distributing plate 52, material distributor 53, uniform distribution pipe 531, dispatching port 532, distributing port 54, material extrusion assembly 60, outer extrusion belt 61, inner extrusion belt 62, outer extrusion circular roll 63, inner extrusion circular roll 64, separation circular roll 65, upper roller group 66, lower roller group 67, and discharging scraper 70.

### Detailed Description of Embodiments

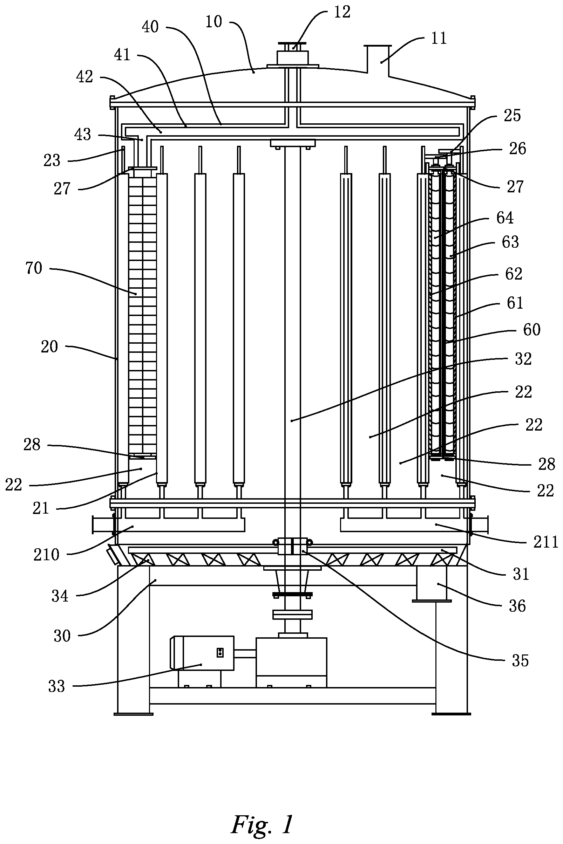

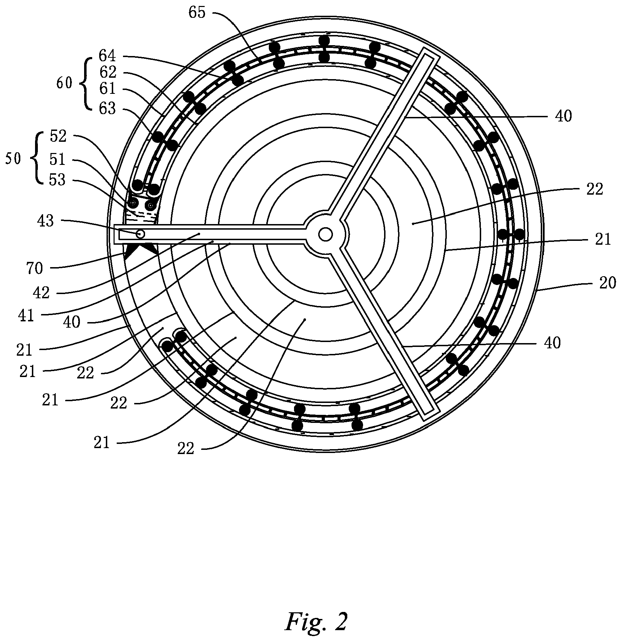

As shown in Figs. 1 and 2, a ring dryer used for drying a slurry material comprises a housing 20, a top cover 10 provided at the top of the housing 20, and a base 30 provided at the bottom of the housing 20, and further comprises a feeding system 40 into which the material to be dried flows, a material coating assembly 50, a material extrusion assembly 60, a discharging scraper 70, and at least two cylinders 21 with different radii.

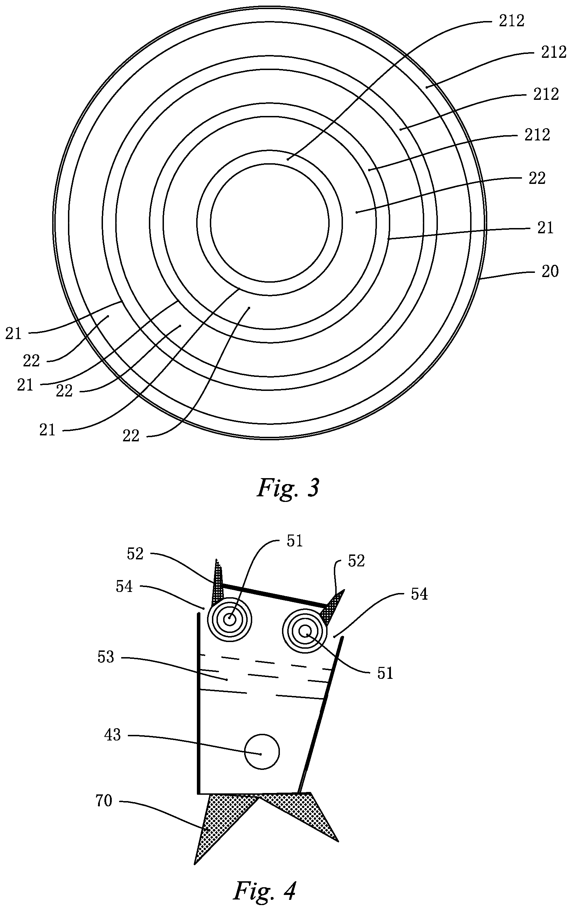

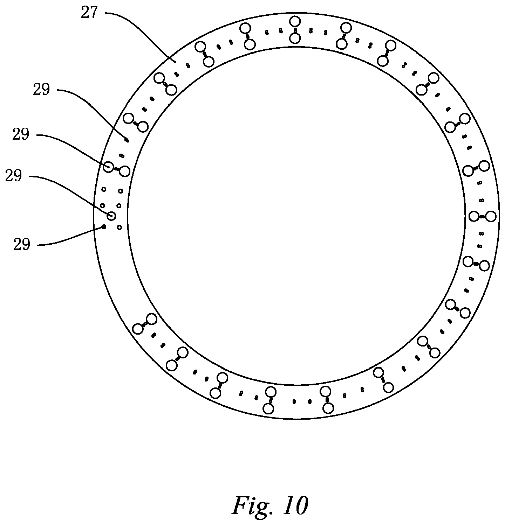

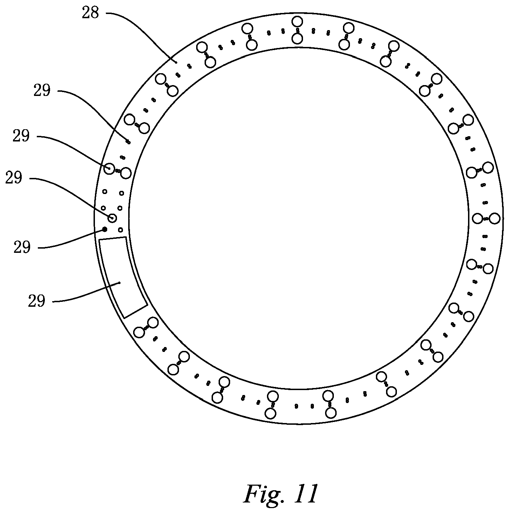

As shown in Figs 1-4, 10 and 11, the cylinder 21 is of a cylindrical structure, and a heat medium flow channel 212 is provided inside the cylinder 21. In the present invention, the cylinder 21 is a cylinder having a ring-shaped cavity provided inside, the ring-shaped cavity forms the heat medium flow channel 212, or a baffle plate is arranged in the ring-shaped cavity to form the heat medium flow channel 212. The cylinder 21 is fixedly arranged in the housing 20, an annular groove 22 is formed between the adjacent cylinders 21, and the cylinder 21 and the housing 20 are coaxially arranged. The feeding system 40 is transversely arranged in the housing 20 and can rotate around an axis of the housing 20. The feeding system 40 is composed of a cross rod 41 and a feeding pipe 42 or composed of a cross rod 41 and a feeding disc. A pipe wall of the feeding pipe 42 is provided with a material outlet 43, or the bottom of the feeding disc is provided with a material outlet 43, and the number of the material outlet 43 is equal to the number of the annular groove 22. When the feeding system 40 is composed of the cross rod 41 and the feeding pipe 42, the number of the cross rod 41 and of the feeding pipe 42 is equal to the number of the annular groove 22. Each feeding pipe 42 is provided with a material outlet 43, and the material to be dried in the feeding system 40 flows into the annular groove 22 along the material outlet 43. The material coating assembly 50, the material extrusion assembly 60 and the discharging scraper 70 are movably arranged in the annular groove 22 and can move along the annular groove 22 relative to the cylinder 21, and a blade of the discharging scraper 70 is respectively in contact with an inner circumferential surface of the cylinder 21 and an outer circumferential surface of the adjacent cylinder 21. In the present invention, the feeding system 40 is transversely arranged in the housing 20 and can rotate around the axis of the housing 20, the free end of the feeding system 40 is connected to an upper connecting plate 27, the top of the discharging scraper 70 is connected to the upper connecting plate 27, the top of the material coating assembly 50 is connected to the upper connecting plate 27, the top of the material extrusion assembly 60 is connected to the upper connecting plate 27, the bottom of the discharging scraper 70 is connected to a lower connecting plate 28, the bottom of the material coating assembly 50 is connected to the lower connecting plate 28, and the bottom of the material extrusion assembly 60 is connected to the lower connecting plate 28. The upper connecting plate 27 is of a ring shape and is provided with a hole 29 for passage of the material outlet 43, the upper connecting plate 27 is provided with holes 29 for connecting with the top of the discharging scraper 70, the top of the material coating assembly 50 and the top of the material extrusion assembly 60; and the lower connecting plate 28 is provided with holes 29 through which the dried material passes and enter the base 30, the lower connecting plate 28 is of a ring shape and is provided with holes 29 for connecting with the bottom of the discharging scraper 70, the bottom of the material coating assembly 50 and the bottom of the material extrusion assembly 60. The feeding system 40 and the upper connecting plate 27 can be detachably connected, can be connected by a pneumatic cylinder, or can be connected by an elastic member, such as connected by a spring. For example, when the feeding system 40 is connected to the upper connecting plate 27 by a spring, when the feeding system 40 is suddenly turned, the spring provides a buffer action on the activation of the upper connecting plate 27, thereby protecting the discharging scraper 70, the material coating assembly 50 and the material extrusion assembly 60 connected to the upper connecting plate 27. The discharging scraper 70 is connected to the upper connecting plate 27 and the lower connecting plate 28, the blades of the discharging scraper 70 are respectively in contact with the inner circumferential surface of the cylinder 21 and the outer circumferential surface of the adjacent cylinder 21, and the dried material on the inner circumferential surface of the cylinder 21 and on the outer circumferential surface of the adjacent cylinder 21 can be scraped off by the discharging scraper 70. The material to be dried in the feeding system 40 flows to the annular groove 22 along the material outlet 43, and under the action of an external force, the feeding system 40, the material coating assembly 50, the material extrusion assembly 60 and the discharging scraper 70 move along the annular groove 22 relative to the cylinder 21, and the material to be dried is coated on the inner circumferential surface of the cylinder 21 and the outer circumferential surface of the adjacent cylinder 21 by the material coating assembly 50. The heat medium is introduced into the heat medium flow channel 212, and the materials to be dried on the inner circumferential surface of the cylinder 21 and the outer circumferential surface of the adjacent cylinder 21 is dried by the heat medium, and at the same time, the dried material is scraped off by the discharging scraper 70. The discharging scraper 70 is of a V-shaped structure, and during the movement of the discharging scraper 70 along the annular groove 22, the dried material on the inner circumferential surface of the cylinder 21 and on the outer circumferential surface of the adjacent cylinder 21 is simultaneously scraped off by the discharging scraper 70. Because both the inner circumferential surface of the cylinder 21 and the outer circumferential surface of the adjacent cylinder 21 are coated with the material to be dried, the area of the material to be dried is increased, thereby improving the drying efficiency; and at the same time, during the drying, the material to be dried has less friction with the components in the present invention, thereby extending the service life of the present invention.

Specifically, as shown in Fig. 1, the material extrusion assembly 60 comprises an outer extrusion belt 61, an inner extrusion belt 62, an outer extrusion circular roll 63 and an inner extrusion circular roll 64. The outer extrusion circular roll 63 drives the outer extrusion belt 61 to rotate and move along the annular groove 22, and the outer extrusion belt 61 is in contact with the inner circumferential surface of the cylinder 21, so that the outer extrusion belt 61 tightly presses the material to be dried onto the inner circumferential surface of the cylinder 21; and the inner extrusion circular roll 64 drives the inner extrusion belt 62 to rotate and move along the annular groove 22, and the inner extrusion belt 62 is in contact with the outer circumferential surface of the adjacent cylinder 21, so that the inner extrusion belt 62 tightly presses the material to be dried onto the outer circumferential surface of the adjacent cylinder 21. Both the outer extrusion belt 61 and the inner extrusion belt 62 are made of a flexible and breathable material, which can be one or any combination of porous rubber, porous soft plastic, a porous metal sheet, a metal net, a non-metal net, metal cloth, non-metal cloth, foamed plastic, a chain plate, a bamboo mat and a straw mat. The outer extrusion belt 61 and the inner extrusion belt 62 are respectively parallel to the circumferential walls of the cylinders 21, and a separation circular roll 65 is provided between the outer extrusion belt 61 and the inner extrusion belt 62. Because the outer extrusion belt 61 and the inner extrusion belt 62 have the same angular velocity, and the linear velocity of the outer extrusion belt 61 is greater than the linear velocity of the inner extrusion belt 62, in order to prevent the outer extrusion belt 61 and the inner extrusion belt 62 from being damaged by extrusion and friction against each other during rotation, the separation circular roll 65 is provided between the outer extrusion belt 61 and the inner extrusion belt 62, and the outer extrusion belt 61 and the inner extrusion belt 62 form a double-track structure. During the rotation and movement of the outer extrusion belt 61 and the inner extrusion belt 62, the material to be dried is tightly attached to the inner circumferential surface of the cylinder 21 by the outer extrusion belt 61 so as to prevent the material to be dried on the inner circumferential surface of the cylinder 21 from falling off, the inner extrusion belt 62 makes the material to be dried close to the outer circumferential surface of the adjacent cylinder 21 and prevents the material to be dried on the outer circumferential surface of the adjacent cylinder 21 from falling off.

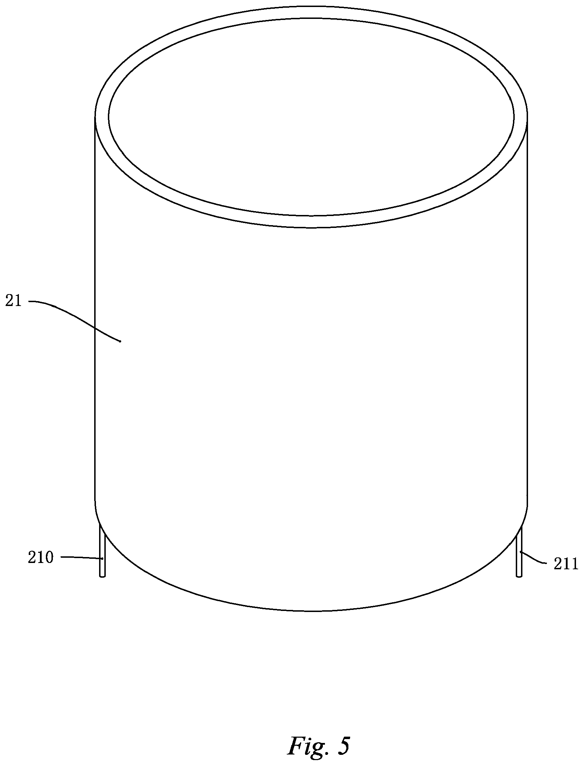

Specifically, as shown in Figs. 2 to 5, the material coating assembly 50 comprises a pair of distributing circular rolls 51 and a pair of distributing plates 52, the pair of distributing circular rolls 51 being longitudinally arranged in the annular groove 22 and parallel to the housing 20, wherein one end of one distributing plate 52 is close to one distributing circular roll 51, and the other end thereof forms a distributing port 54 together with the inner circumferential surface of the cylinder 21; and one end of the other distributing plate 52 is close to the other distributing circular roll 51, and the other end thereof forms a distributing port 54 together with the outer circumferential surface of the adjacent cylinder 21. The included angle between the distributing plate 52 and the inner circumferential surface of the cylinder 21 or the outer circumferential surface of the adjacent cylinder 21 can be adjusted as required to further adjust the size of the distributing port 54. When the distributing circular roll 51 rotates and moves along the annular groove 22, the distributing circular roll 51 extrudes the material to be dried so that the material to be dried is in the shape of a uniform sheet, and the extruded material to be dried enters from the distributing port 54 and is attached to the inner circumferential surface of the cylinder 21 or the outer circumferential surface of the adjacent cylinder 21.

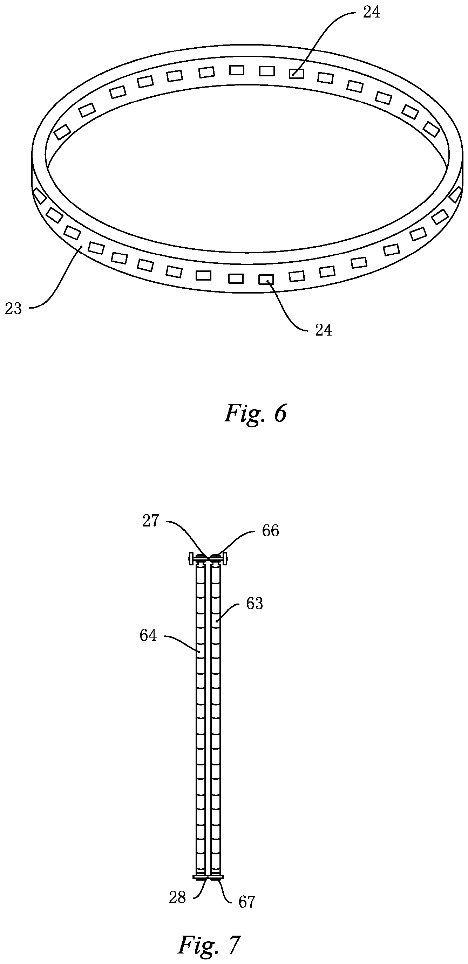

As shown in Figs. 1, 2 and 6, an annular plate 23 is provided at the top of each cylinder 21, and toothing holes 24 are uniformly distributed around the annular plate 23, a first gear 25 is provided at the top of the outer extrusion circular roll 63, a second gear 26 is provided at the top of the inner extrusion circular roll 64, the first gear 25 rotates along the toothing holes 24 of the annular plate 23, and the second gear 26 rotates along the toothing holes 24 of the annular plate 23. An upper roller group 66 is provided at the top of the outer extrusion circular roll 63 and the top of the inner extrusion circular roll 64, and the top of the outer extrusion circular roll 63 is connected to the top of the inner extrusion circular roll 64 by means of the upper roller group 66; and a lower roller group 67 is provided at the bottom of the outer extrusion circular roll 63 and the bottom of the inner extrusion circular roll 64, and the bottom of the outer extrusion circular roll 63 is connected to the inner extrusion circular roll 64 by means of the lower roller group 67.

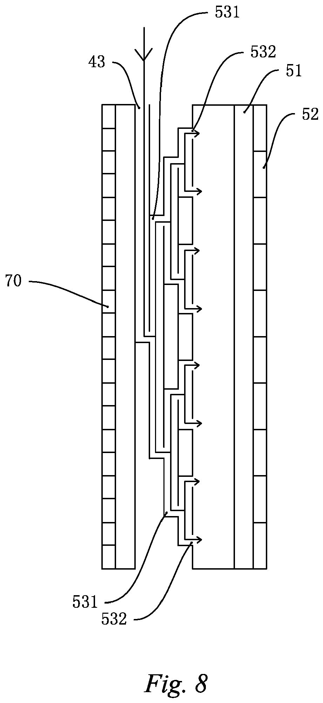

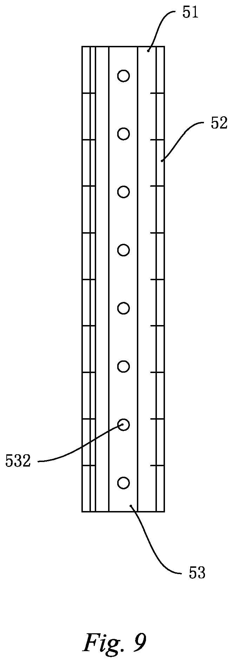

As shown in Figs. 2, 4 and 7-9, the material coating assembly 50 further comprises a material distributor 53, the material distributor 53 comprises several uniform distribution pipes 531 in parallel, the material outlet 43 of the feeding system 40 is connected in a butt joint with the feeding port of the uniform distribution pipe 531 on the inner side, and the uniform distribution pipe 531 on the outer side is provided with several dispatching ports 532 in sequence from top to bottom. The direction of the arrows in Fig. 8 indicates the flow direction of the material to be dried, the material to be dried flows from the material outlet 43 of the feeding system 40 to the feeding port of the material distributor 53, and under the action of the uniform distribution pipe 531, the material to be dried is uniformly distributed in the vertical direction, so that the material to be dried can be uniformly coated on the inner circumferential surface of the cylinder 21 and the outer circumferential surface of the adjacent cylinder 21.

As shown in Fig. 1, the bottom of the housing 20 is provided with a heat medium inlet pipe 210 and a heat medium outlet pipe 211, the heat medium inlet pipe 210 is connected to an inlet of the heat medium flow channel 212 of the cylinder 21, and the heat medium enters the heat medium flow channel 212 of the cylinder 21 from the heat medium inlet pipe 210, and the material to be dried on the inner circumferential surface of the cylinder 21 and on the outer circumferential surface of the adjacent cylinder 21 is dried by the heat medium flowing through the heat medium flow channel 212. The heat medium outlet pipe 211 is connected to an outlet of the heat medium flow channel 212 of the cylinder 21.

As shown in Fig. 1, the top cover 10 is provided with a gas discharge port 11 and a material inlet 12, and the material inlet 12 is connected to the feeding port of the feeding system 40. After the dried material is dried, water vapor is generated, and the water vapor is discharged from the gas discharge port 11.

As shown in Fig. 1, an annular rake rod 31 is provided inside the base 30, and the shaft center of the rake rod 31 is fixedly connected to the shaft center of the feeding system 40 by means of a rotating shaft 32 provided. An electric motor 33 is further provided inside the base 30, and the electric motor 33 drives the rotating shaft 32 to rotate.

As shown in Fig. 1, in the present invention, the rake rod 31 is connected to the rotating shaft 32 by means of a shaft holder 35, several horizontally arranged rake blades 34 are mounted on the rake rod 31, and the rake blades 34 are detachably connected to the rake rod 31. The rake rod 31 and the rake blades 34 are located inside the base 30, and bottom ends of the rake blades 34 are in contact with a bottom surface of the base 30 to move the dried material such that the dried material moves to the discharge port 36.

As shown in Fig. 1, the working process of the present invention is:
a water-containing slurry material to be dried enters the feeding system 40 from the material inlet 12, the material to be dried flows into the material distributor 53 of the material coating assembly 50, the material to be dried is uniformly distributed in the vertical direction by the material distributor 53, the feeding system 40 drives the material coating assembly 50, the material extrusion assembly 60 and the discharging scraper 70 to move along the annular groove 22, the material to be dried is uniformly coated onto the inner circumferential surface of the cylinder 21 and the outer circumferential surface of the adjacent cylinder 21 by the material coating assembly 50, and then the material to be dried is extruded and fixed by the outer extrusion belt 61 and the inner extrusion belt 62 of the material extrusion assembly 60; and a heat medium enters the heat medium flow channel 212, heat is transferred to the material to be dried through the inner circumferential surface of the cylinder 21 and the outer circumferential surface of the adjacent cylinder 21 such that the moisture contained in the material to be dried is vaporized and evaporated, the water vapor is discharged from the gas discharge port 11, and the dried material is scraped off by the discharging scraper 70 and is finally discharged out of the ring dryer from the discharging port 36.

For a second embodiment, the difference between this embodiment and the first embodiment is in that the number of the cylinders 21 can be set as required. In this embodiment, the number of the cylinders 21 is 2 to 30, annular grooves 22 are formed between the adjacent cylinders 21, the feeding system 40 is provided with the same number of material outlets 43 as the annular grooves 22, the material to be dried in the feeding system 40 flows into the annular groove 22 along the corresponding material outlet 43. The material coating assembly 50, the material extrusion assembly 60 and the discharging scraper 70 are movably arranged in the annular groove 22 and can move along the annular groove 22 relative to the cylinder 21, and a blade of the discharging scraper 70 is respectively in contact with an inner circumferential surface of the cylinder 21 and an outer circumferential surface of the adjacent cylinder 21. The structure of the material coating assembly 50 is the same as that in the first embodiment, the material coating assembly 50 is provided with a material distributor 53, the structure of the material distributor 53 is the same as that in the first embodiment. The structure of the material extrusion assembly 60 is the same as that in the first embodiment.

The content described above is merely illustrative of specific embodiments of the present invention, and it should be noted that for those of ordinary skill in the art, various improvements and modifications would have been made without departing from the principle of the present invention, and these improvements and modifications should be construed as falling within the scope of protection of the present invention.

## Claims

1. A ring dryer, comprising a housing, a top cover provided at the top of the housing, and a base provided at the bottom of the housing, **characterized by** further comprising a feeding system into which a material to be dried flows, a material coating assembly, a material extrusion assembly, a discharging scraper, and at least two cylinders with different radii, wherein each of the cylinders is provided with a heat medium flow path inside, an annular groove is formed between the adjacent cylinders, and a material outlet is provided at a free end of the feeding system; the material to be dried in the feeding system flows into the annular groove along the material outlet; the material coating assembly, the material extrusion assembly and the discharging scraper are movably arranged in the annular groove and can move along the annular groove relative to the cylinders; and a blade of the discharging scraper is respectively in contact with an inner circumferential surface of the cylinder and an outer circumferential surface of the adjacent cylinder.

2. The ring dryer according to claim 1, **characterized in that** the material extrusion assembly comprises an outer extrusion belt, an inner extrusion belt, an outer extrusion circular roll and an inner extrusion circular roll, wherein the outer extrusion circular roll drives the outer extrusion belt to rotate and move along the annular groove, and the outer extrusion belt is in contact with the inner circumferential surface of the cylinder; and the inner extrusion circular roll drives the inner extrusion belt to rotate and move along the annular groove, and the inner extrusion belt is in contact with the outer circumferential surface of the adjacent cylinder.

3. The ring dryer according to claim 2, **characterized in that** the outer extrusion belt and the inner extrusion belt are arranged parallel to each other, and a separation circular roll is provided between the outer extrusion belt and the inner extrusion belt.

4. The ring dryer according to claim 1, **characterized in that** the material coating assembly comprises a pair of distributing circular rolls and a pair of distributing plates, the pair of distributing circular rolls being longitudinally arranged in the annular groove and parallel to an axis of the housing, wherein one end of one distributing plate is close to one distributing circular roll, and the other end thereof forms a distributing port together with the inner circumferential surface of the cylinder; and one end of the other distributing plate is close to the other distributing circular roll, and the other end thereof forms a distributing port together with the outer circumferential surface of the adjacent cylinder.

5. The ring dryer according to claim 4, **characterized in that** the material coating assembly further comprises a material distributor, wherein the material distributor comprises several uniform distribution pipes in parallel, the material outlet of the feeding system is connected in a butt joint with a feeding port of the uniform distribution pipe on the inner side, and the uniform distribution pipe on the outer side is provided with several dispatching ports in sequence from top to bottom.

6. The ring dryer according to claim 1, **characterized in that** an annular plate is provided at the top of the cylinder, toothing holes are uniformly distributed around the annular plate, a first gear is provided at the top of the outer extrusion circular roll, a second gear is provided at the top of the inner extrusion circular roll, the first gear rotates along the toothing holes of the annular plate, and the second gear rotates along the toothing holes of the adjacent annular plate.

7. The ring dryer according to any one of claims 1 to 6, **characterized in that** the feeding system is transversely arranged in the housing and can rotate around the axis of the housing, the free end of the feeding system is connected to an upper connecting plate, the top of the discharging scraper is connected to the upper connecting plate, the top of the material coating assembly is connected to the upper connecting plate, the top of the material extrusion assembly is connected to the upper connecting plate, the bottom of the discharging scraper is connected to a lower connecting plate, the bottom of the material coating assembly is connected to the lower connecting plate, and the bottom of the material extrusion assembly is connected to the lower connecting plate.

8. The ring dryer according to any one of claims 1 to 6, **characterized in that** the ring dryer further comprises a rotating shaft, wherein an annular rake rod is provided inside the base, and the rake rod is fixedly connected to the feeding system by means of the rotating shaft.

9. The ring dryer according to any one of claims 1 to 6, **characterized in that** the bottom of the housing is provided with a heat medium inlet pipe and a heat medium outlet pipe, wherein the heat medium inlet pipe is connected to an inlet of the heat medium flow channel of the cylinder, and the heat medium outlet pipe is connected to an outlet of the heat medium flow channel of the cylinder.

10. The ring dryer according to any one of claims 1 to 6, **characterized in that** the top cover is provided with a gas discharge port and a material inlet, and the material inlet is connected to the feeding port of the feeding system.
